# EUROPEAN PATENT SPECIFICATION

(11) **EP 4 549 714 B1**
(45) Date of publication and mention of the grant of the patent: **02.12.2026**
(21) Application number: 24204406.3
(22) Date of filing: 03.10.2024
(51) Int. Cl.: F02C 3/22, B64D 37/30, F02C 7/224

(54) **GAS TURBINE ENGINE**
GASTURBINENTRIEBWERK
MOTEUR À TURBINE À GAZ

(30) Priority: 03.11.2023 GB 202316850
(43) Date of publication of application: 07.05.2025
(73) Proprietor: Rolls-Royce plc, London N1 9FX (GB)
(72) Inventor: Yates, Martin K, Derby, DE24 8BJ (GB); Willmot, Michael C, Derby, DE24 8BJ (GB)
(74) Representative: Rolls-Royce plc

(56) References cited:
- WO-A1-2022/263307
- FR-A1- 3 110 936
- GB-A- 869 274

## Description

### TECHNICAL FIELD

This disclosure relates to fuel systems for hydrogen-fuelled aero gas turbine engines.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures, as either a compressed gas, a supercritical fluid, or a liquid. Such fuel requires heating prior to delivery to the gas turbine, both to permit combustion, and to prevent icing. As such, the applicant has filed patent application EP 3978738 directed to a fuel system for a hydrogen powered gas turbine engine.

However, pumping fuel within such systems, particularly where the hydrogen is supplied as a liquid, is challenging. These challenges include the high power required to pump the hydrogen at the necessary flow rates and pressures, and the risk of cavitation within the pump where the pump operates on liquid hydrogen.

Internation patent application WO2022263307 discloses a fuel conditioning system configured to supply an aircraft turbine engine with fuel from a cryogenic tank. The fuel circuit comprises a buffer tank for supplying the turbine engine and a plurality of compression modules configured to supply the buffer tank, each compression module comprising an elementary tank of fixed volume, an elementary heat source configured to increase the temperature of the fuel in the elementary tank in an isochoric manner, an inlet valve connecting the elementary tank to an upstream part of the fuel circuit, an outlet valve connecting the elementary tank to the buffer tank and a venting valve connecting the elementary tank to the cryogenic tank via a return circuit in which a gaseous stream circulates.

United Kingdom patent application GB869274 discloses a hydrogen fuel system for an internal combustion engine. The fuel system comprises a storage vessel for the hydrogen in liquefied form from which the fuel is drawn off in gaseous form, compressor means to which the gaseous hydrogen is delivered to be compressed and thereby heated prior to its delivery to the engine, means for controlling the flow of the compressed and heated gaseous hydrogen to the engine and means for returning a proportion of the compressed and heated gaseous hydrogen into the liquid hydrogen in the storage vessel to cause evaporation of the liquid hydrogen.

French patent application FR3110936 discloses a pressure regulating device which includes an on-board storage tank, a mixing chamber, first and second lines, a recirculation line, a pressure sensor and a controller. The storage tank stores and supplies cryogenic fuel to a combustion chamber and includes a booster pump. The first line supplies cryogenic fuel in the liquid state and includes a pressurizing pump and a first regulation valve. The second line supplies cryogenic fuel in the gaseous state and includes a compressor and a first control valve. The recirculation line includes a second regulation valve and with a first heat exchanger. The pressure sensor detects the pressure inside the storage tank. The controller receives the pressure and controls the first and second regulation valves, the first control valve, the pressurizing pump, the booster pump and the compressor, as a function of a value of a setpoint pressure inside the storage tank.

### SUMMARY

The invention is directed towards a fuel system for a hydrogen fuelled gas turbine engine comprising:
a tank configured to store hydrogen;
a pump configured to provide pressurised hydrogen at an outlet thereof;
a pre-heater configured to heat at least a portion of pressurised hydrogen fuel downstream of the pump; and
a preheater return offtake configured to return at least a portion of hydrogen fuel heated by the preheater to the tank; characterised in that the fuel system comprises:
   a pump return offtake configured to divert a portion of fuel from an outlet of the pump to the tank; and
   a mixer configured to mix flow from the preheater return offtake and pump return offtake prior to return of the mixed flow to the tank, wherein the mixer comprises an ejector, wherein flow from the preheater return offtake is configured to drive flow from the pump return offtake.

Advantageously, pressure within the liquid hydrogen tank is maintained during operation by heated and pressurised hydrogen from the pump and pre-heater, thereby maintaining positive tank pressure during depletion, and reducing pump pressure head.

The hydrogen tank may be configured to store cooled compressed hydrogen as a supercritical fluid at a pressure between 50 and 350 Bar. Advantageously, a higher proportion of hydrogen stored in the tank can be obtained for the gas turbine engine, since high tank pressure is maintained throughout operation.

Alternatively, the hydrogen tank may be configured to store liquid hydrogen. The hydrogen tank may be configured to store liquid hydrogen at a pressure of between 1 and 4 Bar.

The fuel system may comprise a valve and a controller operable to control flow through the offtake to the tank. The controller may be configured to maintain pressure within the tank above a saturation pressure. Advantageously, pump cavitation is avoided, since the pressure within the liquid hydrogen tank can be maintained above a saturation pressure at the pump inlet.

The fuel system comprises a pump return offtake configured to divert a portion of fuel from an outlet of the pump to the tank.

The fuel system comprises a mixer configured to mix flow from the preheater return offtake and pump return offtake prior to return of the mixed flow to the tank. Advantageously, the temperature, pressure and phase of the hydrogen returned to the tank can be controlled by controlling relative flows from the preheater and pump return offtakes.

The mixer comprises an ejector, wherein flow from the preheater return offtake is configured to drive flow from the pump return offtake. Advantageously, the relatively low-pressure pump return offtake flow can be driven by the higher pressure preheater return offtake flow, to ensure that a sufficient volume of sufficiently high pressure, cold gaseous hydrogen is returned to the tank.

The fuel system may comprise a plurality of hydrogen pumps provided in series. The pump return offtake may be provided downstream of at least a first hydrogen pump outlet, and upstream of a further hydrogen pump inlet. Advantageously, the return line is not provided with the full pressure rise of the hydrogen pumping system, reducing the requirement for throttling, and reducing additional heat input to the hydrogen tank.

The preheater may comprise a burner configured to burn a portion of hydrogen fuel to produce heated hydrogen fuel.

In a second aspect, there is provided a method of delivering hydrogen fuel to a gas turbine engine in accordance with the first aspect, comprising:
pumping hydrogen fuel from a tank through a main fuel conduit;
heating hydrogen to provide a heated pressurised hydrogen gas; and
returning a portion of the heated, pressurised hydrogen gas to the tank; characterised in that the method comprises:
   diverting a portion of fuel from an outlet of the pump to the tank via a pump return offtake; and
   mixing flow from the preheater return offtake and pump return offtake via a mixer prior to return of the mixed flow to the tank, wherein the mixer comprises an ejector, wherein flow from the preheater return offtake drives flow from the pump return offtake.

The method may comprise, by a controller, controlling a valve configured to control flow through the offtake to the tank, to maintain pressure within the tank above a saturation pressure.

### BRIEF DESCRIPTION OF THE DRAWINGS

An embodiment will now be described by way of example only with reference to the accompanying drawings, which are purely schematic and not to scale, and in which:
Figure 1 shows a hydrogen-fuelled airliner comprising hydrogen-fuelled turbofan engines;
Figure 2 is a block diagram of one of the engines of Figure 1 including a fuel system not in accordance with the present disclosure;
Figure 3 is a block diagram of one of the engines of figure 1 including a first alternative fuel system; and
Figure 4 is a block diagram of one of the engines of figure 1 including a second alternative fuel system.

### DETAILED DESCRIPTION

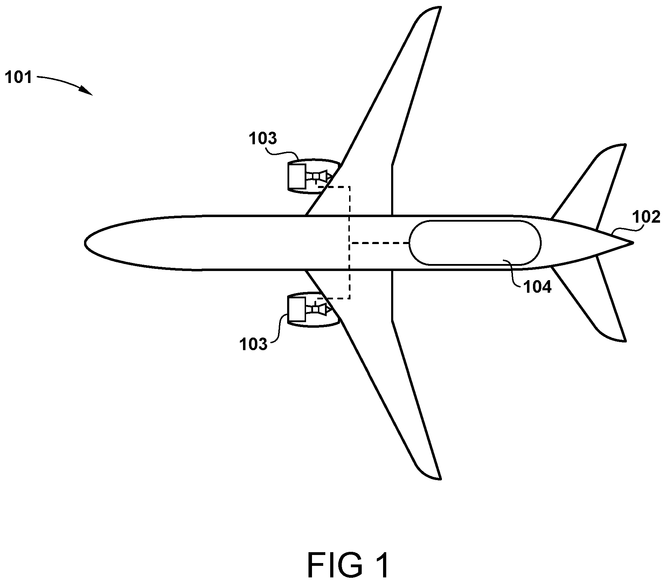

A hydrogen-fuelled airliner is illustrated in Figure 1. In this example, the airliner 101 is of substantially conventional tube-and-wing twinjet configuration with a central fuselage 102 and substantially identical underwing-mounted turbofan engines 103.

A hydrogen storage tank 104 is located in the fuselage 102. In the present embodiment, the hydrogen storage tank 104 is a cryogenic hydrogen storage tank and thus stores the hydrogen fuel in a liquid state, for example between 20 and 26 kelvin, and in a specific example at 25 kelvin. In this example, the hydrogen fuel is pressurised to a pressure from around 1 bar to around 3 bar, in a specific example 2 bar.

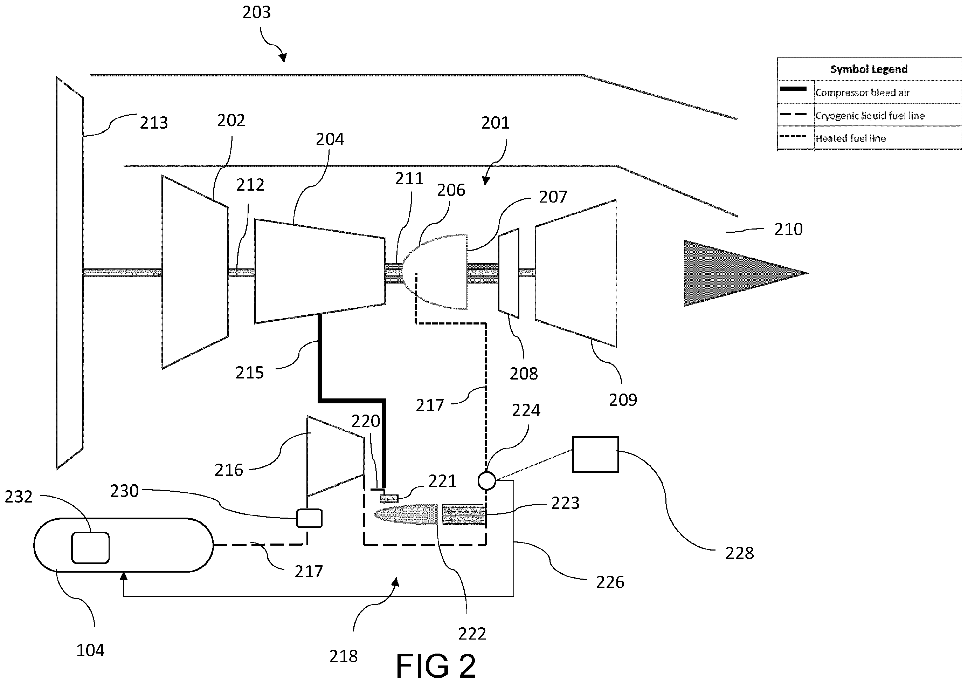

A block diagram of one of the turbofan engines 103 is shown in Figure 2, which shows a first fuel system for the engine 103, which is not in accordance with the present disclosure.

The turbofan engine 103 comprises a core gas turbine 201.

The core gas turbine 201 comprises, in fluid flow series, a low-pressure compressor 202, a high-pressure compressor 204, a fuel injection system 206, a combustor 207, a high-pressure turbine 208, a low-pressure turbine 209, and a core nozzle 210. The high-pressure compressor 204 is driven by the high-pressure turbine 208 via a first shaft 211, and the low-pressure compressor 203 is driven by the low-pressure turbine 209 via a second shaft 212. It will be appreciated that in alternative embodiments, the core gas turbine could be of three-shaft configuration.

In operation, the low-pressure turbine 209 drives a fan 213 via shaft 212.

In operation, hydrogen fuel is pumped from the hydrogen storage tank 104 by a pump 216 and into a main fuel conduit 217 which ultimately delivers fuel to the fuel injection system 206. The pump may be driven by an electric machine or via one or more of the gas turbine engine core shafts 211, 212 via an auxiliary gearbox, or by a turbine powered by heated fuel, exhaust gases from the preheater, or compressed air from the core compressor. The pump provides a "head" of pressure, raising the pressure from the inlet (defined by the pressure conditions upstream of the pump, in particular tank pressure), to a higher pressure at an outlet.

As will be appreciated, it is desirable to also increase the temperature of the fuel from the 25 kelvin cryogenic storage condition to a temperature much closer to the firing temperature of the core gas turbine 201; of course this is subject to the constraint of not exceeding the autoignition temperature of the hydrogen fuel prior to admission into the combustor 207. In an example, the injection temperature is from 250 to 300 kelvin, for example 250 kelvin. In some cases, it may be desirable to increase the fuel temperature to above an icing temperature, such as 273 kelvin.

In the present embodiment, a preheater 218 is therefore provided for heating of the hydrogen fuel, and possibly to implement a phase change where the hydrogen is stored as a liquid. In the present embodiment, this takes place between the pump 216 and the fuel injection system 206. In an embodiment, the preheater 218 is configured to raise the temperature of the hydrogen fuel to the required injection temperature.

The pre-heater 218 comprises a burner offtake 220 to divert a portion of the hydrogen fuel from the main fuel conduit 217. The amount of hydrogen bled from the main fuel conduit 217 is controlled by a valve (not shown). In an embodiment, the valve is controlled actively, for example in response to the temperature of the fuel at the fuel injection system 206. Alternatively, the valve may be passively controlled. In operation, of the order of around 1 percent of the hydrogen fuel flow through the main fuel conduit 217 is bled for use in the heater 218. The pre-heater 218 comprises a burner 222 in which hydrogen is combined with air from a compressed air source such as a compressor bleed 215 and combusted. Combustion gases pass through a heat exchanger 223, where the hot exhaust gases warm the hydrogen in the main hydrogen fuel conduit 217.

As will be appreciated, as the tank is drained in operation, the pressure of hydrogen within the tank may steadily reduce. It is important to maintain a positive pressure within the tank relative to external pressure, in order to maintain structural integrity of the tank, to assist in pumping further hydrogen from the tank, and to prevent cavitation of downstream turbomachinery. Such pressure control may be difficult in view of the varying external pressure as the aircraft climbs and descends. Additionally, the hydrogen may increase in temperature during storage. In view of both the increased pressure and temperature, there is a risk that supercritical or gaseous hydrogen bubbles may form within the hydrogen fuel conduit 217 upstream of the pump. Such bubbles may also be formed or increased in volume due to the low pressure caused by suction from the pump 216. Bubbles within the hydrogen fuel may result in cavitation within the pump 216, which may result in bearing damage (due to unbalanced impeller forces) and damage to the impeller itself, thereby reducing pump life and increasing risk of failure. Finally, the pumping system relies on a minimum delivery pressure from the tank. A reduced delivery pressure will require greater pumping work, which necessitates large pumps, and possibly more pumping stages, which results in increased weight. Consequently, the present disclosure provides means for increasing or at least maintaining the pressure within the tank 104, and upstream of the pump 216 within the main fuel conduit 217.

Downstream of the pre-heater 218 in main hydrogen fuel flow is a pre-heater offtake return valve 224, which is configured to control flow from the main fuel conduit 217 to the injection system 206 and to a pre-heater return line 226. The return line 226 communicates between the offtake return valve 224 and the tank 104. Consequently, pressurised, heated hydrogen fuel diverted from the main fuel conduit 217 downstream of the pump and the pre-heater 218 can be provided back to the hydrogen tank 104 by operation of the pre-heater offtake return valve 224. As will be appreciated, fuel pressure within the return line 226 will be higher than tank pressure in view of operation of the pump 216 and pre-heater 218, such that hydrogen will flow toward the tank 104. Where the tank is configured to store liquid hydrogen, the return flow may be provided to an ullage space within the tank 104.

As such, the tank pressure and pump inlet pressure are both maintained at a relatively high level. In one example, the valve 224 is controlled by a controller 228 to ensure pressure at a pump 216 inlet is above a saturation pressure, such that bubbles do not form within the flow. Pressure and / or temperature pump sensors 230 may be provided, configured to sense pressure and / or temperature conditions at the pump inlet. In the event that conditions are present which are indicative of the fluid approaching the saturation pressure, the controller 228 may be configured to control the valve 224 to increase return flow to the tank 104. Additionally or alternatively, pressure and / or temperature tank sensors 232 may be provided to sense pressure and / or temperature conditions within the tank 104. The controller 228 may be configured to control the valve 224 to increase return flow in the event that conditions are non-optimal, e.g. if pressure within the tank 104 is too low. The system may take into account one or more pressure requirements. For example, a first pressure requirement may comprise a saturation pressure requirement. A second pressure requirement may comprise a pump inlet pressure requirement, i.e. a minimum pressure required at an inlet to the pump 216 to provide for operation. A third pressure requirement may comprise a tank structural integrity requirement, i.e. a minimum pressure required to prevent collapse or excess stress on the tank 104. The system may be configured to operate the valve 224 such that all three requirements are met.

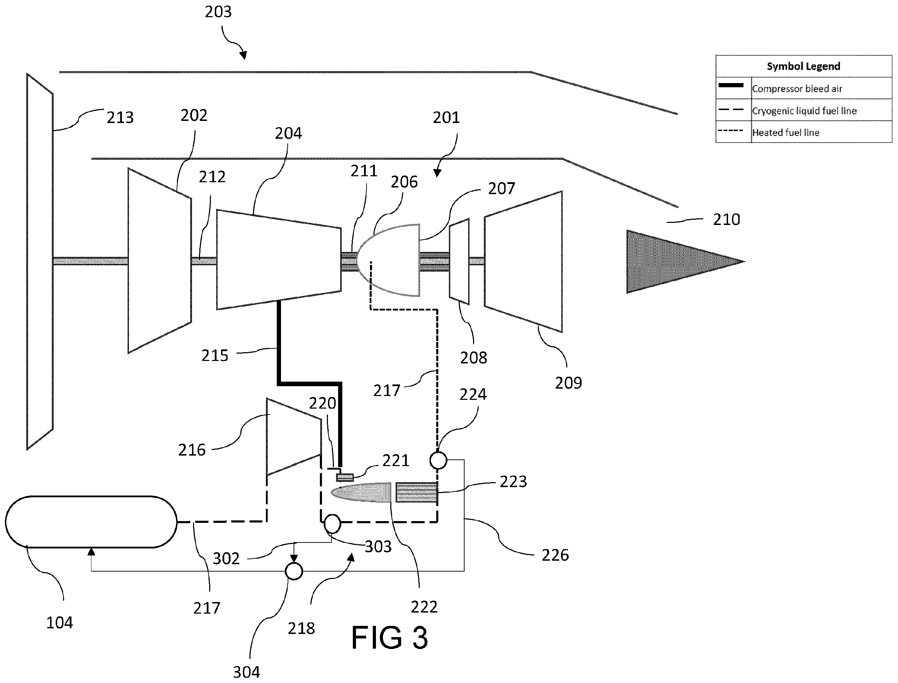

Figure 3 illustrates a first alternative fuel system for the engine 103. The system is similar to that shown in figure 2, but additional features are provided.

The system of figure 3 includes a pump return offtake line 302. A first end of the pump return offtake line 302 is in fluid communication with an offtake located in the main hydrogen conduit 217 between an outlet of the pump 216 and an inlet of the pre-heater heat exchanger 223. A second end of the pump return offtake line 302 is in fluid communication with a mixer 304, which is in turn provided in fluid communication with the pre-heater return line 226, downstream of the offtake return valve in hydrogen fuel flow. Flow through the return line 302 is controlled by a valve 303. As such, the return lines 302, 226 bleed a portion of hydrogen fuel flow from the main conduit 217 from points between the pump 216 and the pre-heater heat exchanger 223, and downstream of the pre-heater heat exchanger respectively, and provide them to the mixer 304. Typically, the pump return offtake line 302 carries liquid hydrogen in operation, while the hydrogen in the pre-heater return line 226 from the valve 224 is in a gaseous or supercritical state.

The mixer 304 takes the two flows, which may be at different pressures, temperatures and phases, and combines them to provide a mixed flow back to the hydrogen tank 104. The mixer may operate as an ejector, with the higher energy flow from downstream of the heater entraining and pumping flow bled from the pump return line 302.

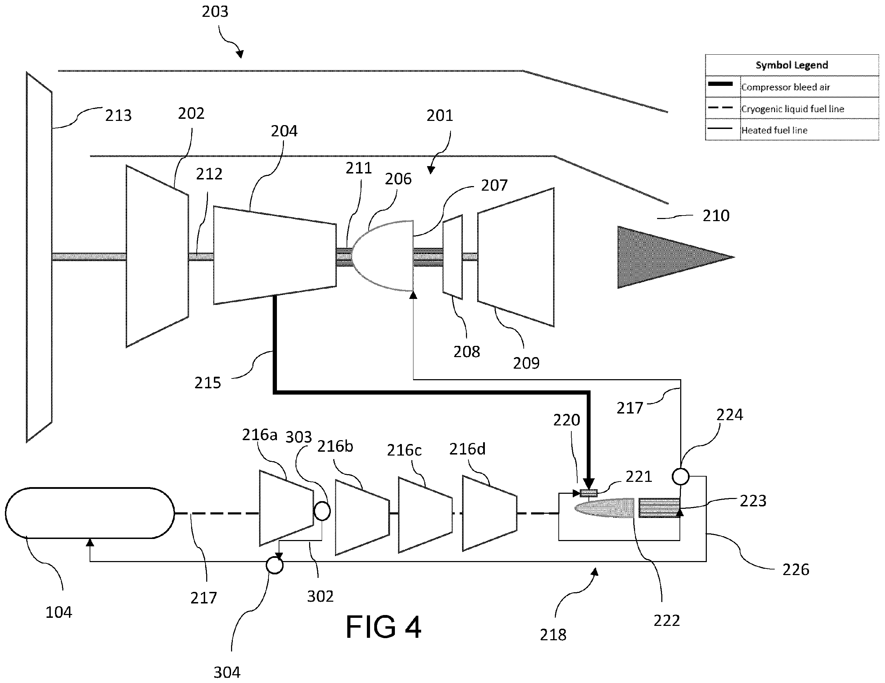

Figure 4 shows a second alternative fuel system for the engine 103. The system is similar to that shown in figure 3, but further additional features are provided.

In place of the single liquid hydrogen pump 216, a plurality of hydrogen pumps 216a, 216b, 216c, 216d are provided in series.

A first hydrogen pump 216a is provided downstream of the tank 104 is main hydrogen fuel conduit 217 flow, and will encounter the lowest inlet pressure of the pumps 216a-d. As such, this pump will be most susceptible to cavitation. Second, third and fourth pumps 216b-d are provided downstream in series.

The pump return line 302 is provided having an offtake point between an outlet of the first pump 216a and an inlet of the second pump 216b. Operation of the valve 303 thereby both controls flow to the mixer 304, and also relieves pressure downstream of the first pump 216a and upstream of the second pump 216b. As such, pressure head provided by the pumps 216a, 216b can be controlled, to provide improved operability and increased stall margin.

Although shown as being relative close together in figure 4, the pumps 216a-d could be spaced significantly from each other. For example, the first pump 216a may be provided within the wing or fuselage of the aircraft, physically proximate the tank 104. The second, third and fourth pumps 216b-d may be provided within an engine nacelle, proximate the engine 103. As such, the return line 302 is provided on the aircraft within the fuselage or wing, thereby reducing the length of ducting required.

Various examples have been described, each of which comprise various combinations of features. It will be appreciated by those skilled in the art that, except where clearly mutually exclusive, any of the features may be employed separately or in combination with any other features.

Modifications could be made to the disclosed arrangement. For example, the hydrogen tank could be configured to store hydrogen in a compressed gaseous or supercritical state.

## Claims

1. A fuel system for a hydrogen fuelled gas turbine engine (201) comprising:
a tank (104) configured to store hydrogen;
a pump (216) configured to provide pressurised hydrogen at an outlet thereof;
a pre-heater (218) configured to heat at least a portion of pressurised hydrogen fuel downstream of the pump (216); and
a preheater return offtake (226) configured to return at least a portion of hydrogen fuel heated by the preheater (218) to the tank (104); **characterised in that** the fuel system comprises:
a pump return offtake (302) configured to divert a portion of fuel from an outlet of the pump (302) to the tank (104); and
a mixer (304) configured to mix flow from the preheater return offtake (226) and pump return offtake (302) prior to return of the mixed flow to the tank (104), wherein the mixer (304) comprises an ejector, wherein flow from the preheater return offtake (226) is configured to drive flow from the pump return offtake (302).

2. A fuel system according to claim 1, wherein the tank (104) is configured to store cooled compressed hydrogen as a supercritical fluid at a pressure between 50 and 350 Bar.

3. A fuel system according to claim 1, wherein the tank (104) is configured to store liquid hydrogen.

4. A fuel system according to claim 3, wherein the tank (104) is configured to store liquid hydrogen at a pressure of between 1 and 4 Bar.

5. A fuel system according to any of the preceding claims, wherein the fuel system comprises a valve (224) and a controller (228) operable to control flow through the preheater return offtake (226) to the tank (104).

6. A fuel system according to claim 5, wherein the controller (228) is configured to maintain pressure within the tank (104) above a saturation pressure.

7. A fuel system according to any of the preceding claims, wherein the fuel system comprises a plurality of hydrogen pumps (216a, 216b, 216c, 216d) provided in series.

8. A fuel system according to claim 7, wherein the pump return offtake (302) is provided downstream of at least a first hydrogen pump (216a) outlet, and upstream of a further hydrogen pump (216b) inlet.

9. A fuel system according to any of the preceding claims, wherein the preheater (218) comprises a burner (222) configured to burn a portion of hydrogen fuel to produce heated hydrogen fuel.

10. A method of delivering hydrogen fuel to a gas turbine engine in accordance with the first aspect, comprising:
pumping hydrogen fuel from a tank (104) through a main fuel conduit (217);
heating hydrogen to provide a heated pressurised hydrogen gas; and
returning a portion of the heated, pressurised hydrogen gas to the tank (104) via a preheater return offtake (226);
**characterised in that** the method comprises:
diverting a portion of fuel from an outlet of the pump (302) to the tank (104) via a pump return offtake (302); and
mixing flow from the preheater return offtake (226) and pump return offtake (302) via a mixer (304) prior to return of the mixed flow to the tank (104), wherein the mixer (304) comprises an ejector, wherein flow from the preheater return offtake (226) drives flow from the pump return offtake (302).

11. A method according to claim 10, wherein the method comprises, by a controller (228), controlling a valve (224) configured to control flow through the preheater return offtake (226) to the tank (104), to maintain pressure within the tank above a saturation pressure.

## Patentansprüche

1. Kraftstoffsystem für ein wasserstoffbetriebenes Gasturbinentriebwerk (201), umfassend:
einen Tank (104), der dazu konfiguriert ist, Wasserstoff zu speichern;
eine Pumpe (216), die dazu konfiguriert ist, unter Druck stehenden Wasserstoff an einem Auslass davon bereitzustellen;
einen Vorwärmer (218), der dazu konfiguriert ist, mindestens einen Teil von unter Druck stehendem Wasserstoffkraftstoff stromabwärts der Pumpe (216) zu erwärmen; und
eine Vorwärmerrücklaufableitung (226), die dazu konfiguriert ist, mindestens einen Teil von durch den Vorwärmer (218) erwärmtem Wasserstoffkraftstoff zu dem Tank (104) zurückzuführen; **dadurch gekennzeichnet, dass** das Kraftstoffsystem Folgendes umfasst:
eine Pumpenrücklaufableitung (302), die dazu konfiguriert ist, einen Teil von Kraftstoff von einem Auslass der Pumpe (302) zu dem Tank (104) abzuzweigen; und
einen Mischer (304), der dazu konfiguriert ist, einen Strom von der Vorwärmerrücklaufableitung (226) und der Pumpenrücklaufableitung (302) vor einem Rückführen des gemischten Stroms zu dem Tank (104) zu mischen, wobei der Mischer (304) einen Ejektor umfasst, wobei ein Strom von der Vorwärmerrücklaufableitung (226) dazu konfiguriert ist, einen Strom von der Pumpenrücklaufableitung (302) anzutreiben.

2. Kraftstoffsystem nach Anspruch 1, wobei der Tank (104) dazu konfiguriert ist, gekühlten komprimierten Wasserstoff als ein überkritisches Fluid bei einem Druck zwischen 50 und 350 bar zu speichern.

3. Kraftstoffsystem nach Anspruch 1, wobei der Tank (104) dazu konfiguriert ist, flüssigen Wasserstoff zu speichern.

4. Kraftstoffsystem nach Anspruch 3, wobei der Tank (104) dazu konfiguriert ist, flüssigen Wasserstoff bei einem Druck zwischen 1 und 4 bar zu speichern.

5. Kraftstoffsystem nach einem der vorhergehenden Ansprüche, wobei das Kraftstoffsystem ein Ventil (224) und eine Steuerung (228) umfasst, die betreibbar sind, um einen Strom durch die Vorwärmerrücklaufableitung (226) zu dem Tank (104) zu steuern.

6. Kraftstoffsystem nach Anspruch 5, wobei die Steuerung (228) dazu konfiguriert ist, einen Druck innerhalb des Tanks (104) über einem Sättigungsdruck zu halten.

7. Kraftstoffsystem nach einem der vorhergehenden Ansprüche, wobei das Kraftstoffsystem eine Vielzahl von Wasserstoffpumpen (216a, 216b, 216c, 216d) umfasst, die in Reihe bereitgestellt sind.

8. Kraftstoffsystem nach Anspruch 7, wobei die Pumpenrücklaufableitung (302) stromabwärts eines Auslasses mindestens einer ersten Wasserstoffpumpe (216a) und stromaufwärts eines Einlasses einer weiteren Wasserstoffpumpe (216b) bereitgestellt ist.

9. Kraftstoffsystem nach einem der vorhergehenden Ansprüche, wobei der Vorwärmer (218) einen Brenner (222) umfasst, der dazu konfiguriert ist, einen Teil von Wasserstoffkraftstoff zu verbrennen, um erwärmten Wasserstoffkraftstoff herzustellen.

10. Verfahren zum Zuführen von Wasserstoffkraftstoff zu einem Gasturbinentriebwerk gemäß dem ersten Aspekt, umfassend:
Pumpen eines Wasserstoffkraftstoffs aus einem Tank (104) durch eine Hauptkraftstoffleitung (217);
Erwärmen von Wasserstoff, um ein erwärmtes, unter Druck stehendes Wasserstoffgas bereitzustellen; und
Rückführen eines Teils des erwärmten, unter Druck stehenden Wasserstoffgases zu dem Tank (104) über eine Vorwärmerrücklaufableitung (226);
**dadurch gekennzeichnet, dass** das Verfahren Folgendes umfasst:
Abzweigen eines Teils von Kraftstoff von einem Auslass der Pumpe (302) zu dem Tank (104) über eine Pumpenrücklaufableitung (302); und
Mischen eines Stroms von der Vorwärmerrücklaufableitung (226) und der Pumpenrücklaufableitung (302) über einen Mischer (304) vor einem Rückführen des gemischten Stroms zu dem Tank (104), wobei der Mischer (304) einen Ejektor umfasst, wobei ein Strom von der Vorwärmerrücklaufableitung (226) einen Strom von der Pumpenrücklaufableitung (302) antreibt.

11. Verfahren nach Anspruch 10, wobei das Verfahren Steuern eines Ventils (224) durch eine Steuerung (228) umfasst, das dazu konfiguriert ist, einen Strom durch die Vorwärmerrücklaufableitung (226) zu dem Tank (104) zu steuern, um einen Druck innerhalb des Tanks über einem Sättigungsdruck zu halten.

## Revendications

1. Système de carburant pour un moteur à turbine à gaz alimenté à l'hydrogène (201) comprenant :
un réservoir (104) conçu pour stocker de l'hydrogène ;
une pompe (216) conçue pour fournir de l'hydrogène sous pression au niveau d'une sortie de celle-ci ;
un préchauffeur (218) conçu pour chauffer au moins une partie du carburant hydrogène sous pression en aval de la pompe (216) ; et
une prise de retour de préchauffeur (226) conçue pour renvoyer au moins une partie du carburant hydrogène chauffé par le préchauffeur (218) au réservoir (104) ; **caractérisé en ce que** le système de carburant comprend :
une prise de retour de pompe (302) conçue pour détourner une partie du carburant depuis une sortie de la pompe (302) vers le réservoir (104) ; et
un mélangeur (304) conçu pour mélanger le flux provenant de la prise de retour de préchauffeur (226) et de la prise de retour de pompe (302) avant le retour du flux mélangé vers le réservoir (104), dans lequel le mélangeur (304) comprend un éjecteur, dans lequel le flux provenant de la prise de retour de préchauffeur (226) est conçu pour entraîner le flux provenant de la prise de retour de pompe (302).

2. Système de carburant selon la revendication 1, dans lequel le réservoir (104) est conçu pour stocker de l'hydrogène comprimé refroidi en tant que fluide supercritique à une pression comprise entre 50 et 350 Bar.

3. Système de carburant selon la revendication 1, dans lequel le réservoir (104) est conçu pour stocker de l'hydrogène liquide.

4. Système de carburant selon la revendication 3, dans lequel le réservoir (104) est conçu pour stocker de l'hydrogène liquide à une pression comprise entre 1 et 4 Bar.

5. Système de carburant selon l'une quelconque des revendications précédentes, dans lequel le système de carburant comprend une vanne (224) et un contrôleur (228) utilisables pour réguler le débit traversant la prise de retour de préchauffeur (226) vers le réservoir (104).

6. Système de carburant selon la revendication 5, dans lequel le contrôleur (228) est conçu pour maintenir la pression à l'intérieur du réservoir (104) au-dessus d'une pression de saturation.

7. Système de carburant selon l'une quelconque des revendications précédentes, dans lequel le système de carburant comprend une pluralité de pompes à hydrogène (216a, 216b, 216c, 216d) disposées en série.

8. Système de carburant selon la revendication 7, dans lequel la prise de retour de pompe (302) est prévue en aval d'au moins une sortie d'une première pompe à hydrogène (216a), et en amont d'une entrée d'une pompe à hydrogène supplémentaire (216b).

9. Système de carburant selon l'une quelconque des revendications précédentes, dans lequel le préchauffeur (218) comprend un brûleur (222) conçu pour brûler une partie du carburant hydrogène afin de produire du carburant hydrogène chauffé.

10. Procédé de délivrance de carburant hydrogène à un moteur à turbine à gaz selon le premier aspect, comprenant :
le pompage de carburant hydrogène à partir d'un réservoir (104) à travers un conduit de carburant principal (217) ;
la chauffe de l'hydrogène pour fournir un gaz hydrogène sous pression chauffé ; et
le retour d'une partie du gaz hydrogène sous pression chauffé au réservoir (104) via une prise de retour de préchauffeur (226) ;
**caractérisé en ce que** le procédé comprend :
le détournement d'une partie du carburant provenant d'une sortie de la pompe (302) vers le réservoir (104) via un prise de retour de pompe (302) ; et
le mélange du flux provenant de la prise de retour de préchauffeur (226) et de la prise de retour de pompe (302) via un mélangeur (304) avant le retour du flux mélangé vers le réservoir (104), dans lequel le mélangeur (304) comprend un éjecteur, dans lequel le flux provenant de la prise de retour de préchauffeur (226) entraîne le flux provenant de la prise de retour de pompe (302).

11. Procédé selon la revendication 10, dans lequel le procédé comprend, au moyen d'un contrôleur (228), la commande d'une vanne (224) conçue pour réguler le débit traversant la prise de retour de préchauffeur (226) vers le réservoir (104), afin de maintenir la pression à l'intérieur du réservoir au-dessus d'une pression de saturation.
